## Europäisches Patentamt
## European Patent Office
## Office européen des brevets

(19)

(11) Numéro de publication: **0 007 820**
**B1**

(12)

# FASCICULE DE BREVET EUROPEEN

(45) Date de publication du fascicule du brevet: **20.01.82**

(51) Int. Cl.³: **B 60 G 21/04, B 60 G 7/04**

(21) Numéro de dépôt: **79400418.4**

(22) Date de dépôt: **22.06.79**

(54) **Perfectionnement à la suspension d'un groupe de roues de véhicule.**

(30) Priorité: **25.07.78 FR 7821974**

(43) Date de publication de la demande:
**06.02.80 Bulletin 80/3**

(45) Mention de la délivrance du brevet:
**20.01.82 Bulletin 82/3**

(84) Etats contractants désignés:
**DE GB IT**

(56) Documents cités:
FR - A - 774 463
FR - A - 1 395 686
FR - A - 2 185 517
FR - A - 2 289 360
FR - A - 2 366 948
US - A - 2 674 450
US - A - 2 890 895
US - A - 4 113 278

(73) Titulaire: **SOCIETE ANONYME AUTOMOBILES CITROEN**
**117 à 167, Quai André Citroen**
**F-75747 Paris Cedex 15 (FR)**

(73) Titulaire: **AUTOMOBILES PEUGEOT**
**75, avenue de la Grande Armée**
**F-75116 Paris (FR)**

(72) Inventeur: **Chambon, André Fernand**
**28, rue Royon**
**F-91120 Palaiseau (FR)**

(74) Mandataire: **Robert, Jean-Pierre et al,**
**CABINET BEAU DE LOMENIE 55, rue d'Amsterdam**
**F-75008 Paris (FR)**

Courier Press, Leamington Spa, England.

Perfectionnement à la suspension d'un groupe de roues de véhicule.

La présente invention, due à la collaboration de Monsieur André Fernand CHAMBON concerne un perfectionnement à une suspension d'un groupe de roues de véhicule.

Il est connu de réaliser la suspension d'un groupe de roues d'un véhicule (par exemple celles du train avant) au moyen de barres de torsion longitudinales, chacune d'elles étant reliée par l'une de ses extrémités à la roue correspondante, et par son autre extrémité à un élément élastique transversal commun appelé organe de stabilisation anti-roulis.

Dans le cadre de ces réalisations connues, certaines sont telles que lesdites barres de torsion s'étendent à l'extérieur de panneaux longitudinaux solidaires de la structure du véhicule, par exemple des longerons, et de manière sensiblement parallèle à ceux-ci, l'élément anti-roulis s'étendant transversalement au-delà de ces longerons pour être attelé auxdites barres de torsion (cf. FR—A—2289360).

La présente invention entend proposer un perfectionnement à ce type particulier de suspension permettant une modulation des caractéristiques élastiques de l'élément anti-roulis en fonction de la charge du véhicule et donc des caractéristiques de la suspension tout en soulageant ledit élément d'une partie des efforts qui lui sont appliqués conduisant à une construction allégée de ce dernier.

A cet effet, le perfectionnement objet de l'invention est relatif à la suspension d'un groupe de roues de véhicule comprenant deux roues situées respectivement à l'extérieur d'au moins deux panneaux longitudinaux appartenant à la structure du véhicule, deux dispositifs de suspension, chacun d'eux étant constitué par au moins une barre de torsion sensiblement parallèle aux panneaux susdits reliée à une de ses extrémités à la roue correspondante, et un organe élastique transversal sensiblement perpendiculaire auxdits panneaux et ancré à l'autre extrémité de chacune des barres de torsion susdites à l'extérieur desdits panneaux.

Selon l'une des caractéristiques de l'invention, chaque extrémité de l'organe élastique susdit se prolonge au-delà de son ancrage à la barre de torsion correspondante par rapport audit panneau en une partie extrême s'étendant en regard d'un élément solidaire de ladite structure tandis qu'entre ledit élément et ladite partie extrême, est disposée une butée déformable élastiquement tendant à s'opposer à leur mouvement relatif au-delà d'un seuil déterminé de charge du véhicule.

Ladite butée est soit solidaire dudit élément et porte par contact simple sur l'organe élastique, soit solidaire dudit organe élastique et porte par contact simple sur ledit élément.

Dans un mode préféré de réalisation, cette butée est constituée par un coussin en matière élastique de dimensions telles qu'elle n'agit qu'à partir du seuil de charge déterminé susdit.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels:

— La figure 1 illustre schématiquement une suspension connue à laquelle se rapporte l'invention,

— La figure 2 est une vue de détail du perfectionnement conforme à l'invention.

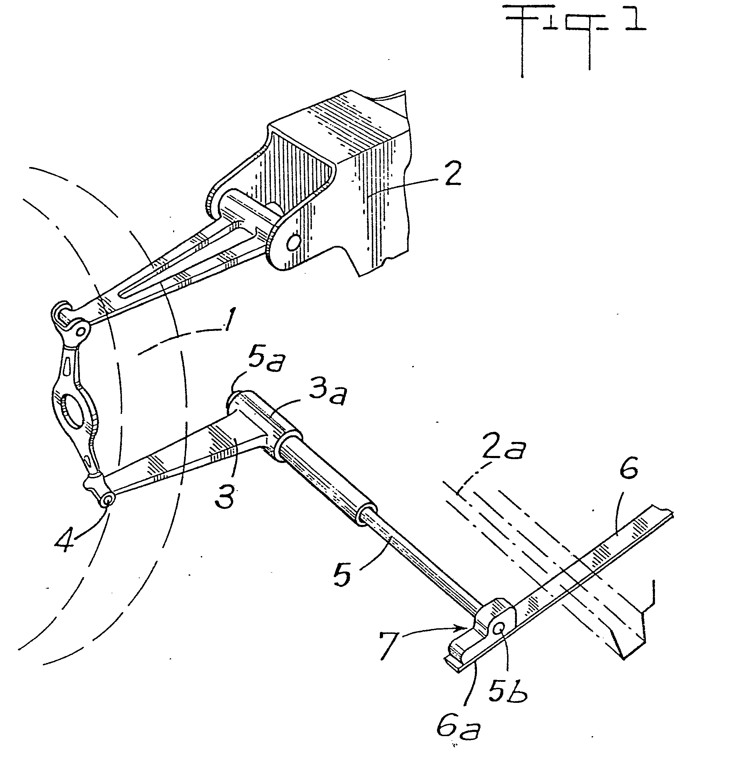

En se reportant tout d'abord à la figure 1, on voit la suspension, sur la roue avant gauche 1, de la structure 2 du véhicule au moyen, de manière connue, d'un bras de suspension 3 articulé à la roue en 4 et monté à rotation sur un longeron 2a appartenant à la structure du véhicule dans un palier non représenté, situé, généralement au voisinage de l'extrémité 3a du bras 3.

Une barre de torsion 5, extérieure au longeron 2a sensiblement parallèle à ce dernier, est encastrée par l'une de ses extrémités 5a dans le bras 3 et est maintenue en place dans ce bras au moyen d'un dispositif de blocage. L'autre extrémité 5b de cette barre est ancrée à l'une des extrémités 6a d'un élément élastique 6 transversal sensiblement perpendiculaire audit longeron, ici en forme d'une lame, ayant une fonction de stabilisation antiroulis. Il faut imaginer une même disposition pour la roue avant droite du véhicule, non représentée, la barre de torsion relative à cette roue étant ancrée à l'autre extrémité de l'élément 6.

L'ancrage de chaque barre de torsion sur la lame 6 est ici réalisé au moyen d'une pièce rapportée 7 solidaire de la lame 6. Cet ancrage se trouve à l'extérieur du longeron 2a et de ce fait, la lame 6 soit traverse ledit longeron, soit passe sous ce dernier au travers d'un coussin élastique rapporté sous le longeron.

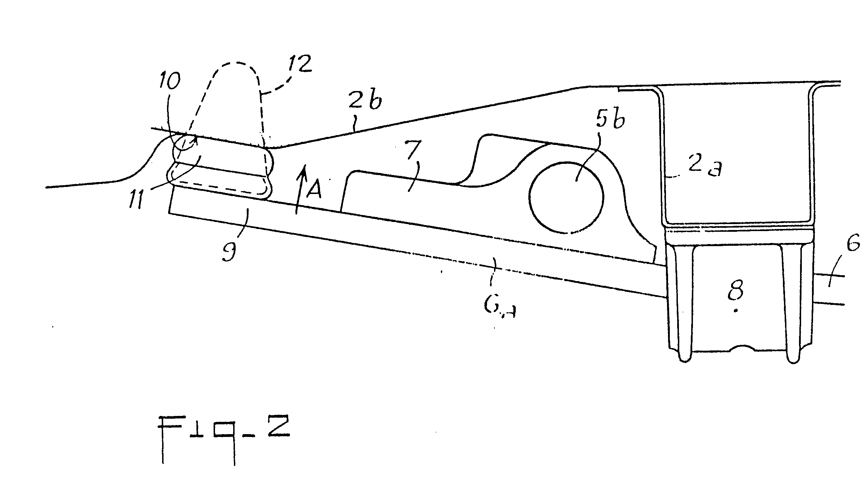

Sur la figure 2, on a représenté, vue de bout, le longeron 2a appartenant à la structure pourvu d'un boîtier inférieur 8 qui contient un coussin élastique traversé par l'extrémité 6a de la lame anti-roulis 6.

Contrairement à ce qui apparaît sur la figure 1, ladite extrémité 6a se prolonge au-delà de la pièce 7 en une partie extrême 9 située en regard d'un élément 2b rigide solidaire de la structure (par exemple une partie de bas de caisse) comportant une surface 10 sensiblement parallèle à la partie extrême 9 de la lame. Entre cette surface et ladite partie extrême, on a disposé une butée élastiquement déformable 11 ayant pour effet de tendre à s'opposer au rapprochement des parties 9 et surface 10.

Cette butée sera de préférence réalisée en une matière élastique du genre élastomère. Dans un premier mode de réalisation, cette butée est fixée par tout moyen connu (adhérisation, fixation par l'intermédiaire d'un support...) sur la partie 9 de la lame 6 et portera par contact simple sur la surface. Dans un autre mode de réalisation, cette butée sera solidaire de l'élément 2b par exemple en étant collée au fond d'un logement 12, symbolisé en traits interrompus sur la figure et portera par appui simple sur la partie 9 de la barre 6.

Lorsque la charge du véhicule augmente, la barre de torsion 5 engendre par son extrémité 5b, un effort dans la pièce 7 et l'extrémité 6a de la lame 6 qui tend à déplacer la partie 9 en direction de l'élément 2b selon la flèche A. Ce déplacement provoque l'écrasement de cette butée entre les éléments 9 et 2b. Comme la butée est élastique, la force de réaction qu'elle exerce sur l'élément 9, tendant à s'opposer au rapprochement susdit sera d'autant plus importante que l'écrasement sera plus prononcé. Il résulte de ce fait que la lame 6 est soumise à un effort supplémentaire variant dans le même sens que la charge du véhicule qui a pour effet de s'opposer aux déformations de la lame 6, d'autant plus énergiquement que la charge est importante. En d'autres termes, la lame 6 voit sa raideur augmenter dans le même sens que l'augmentation de la charge.

En plus, l'effort auquel est soumise la partie 9 de la lame, s'oppose à l'augmentation de la déformation en flexion de cette dernière. Il s'ensuit que cette lame étant moins sollicitée en ce qui concerne les déformations maximales qu'elle doit subir, peut être allégée et réduite en dimension.

Enfin, on peut prévoir des dimensions de la butée 11 telles que son écrasement ne soit effectif et ne donne naissance à un effort significatif que si le véhicule est soumis à une charge supérieure à une charge donnée (par exemple, le poids d'une personne). C'est ainsi par exemple que l'on peut prévoir une butée légèrement plus courte que la distance séparant la partie 9 de la surface 10, le véhicule étant à vide. On peut également imaginer sans sortir du cadre de l'invention, que ladite butée, constamment en contact entre les deux éléments 9 et 10, possède une zone de grande souplesse et de faible rigidité, susceptible de s'écraser sans faire naître d'effort significatif entre ces éléments, la valeur maximale de cet écrasement correspondant au seuil de charge susdit.

L'invention trouve une application intéressante dans le domaine de la construction automobile.

Elle n'est pas limitée à la description qui vient d'en être donnée, mais couvre au contraire toutes les variantes qui pourraient lui être apportées sans sortir de son cadre ni de son esprit.

## Revendications

1. Perfectionnement à la suspension d'un groupe de roues de véhicule comprenant deux roues (1) situées respectivement à l'extérieur d'au moins deux panneaux longitudinaux (2a) appartenant à la structure (2) du véhicule, deux dispositifs de suspension, chacun d'eux étant constitué par au moins une barre de torsion (5) sensiblement parallèle aux panneaux susdits (2a) reliée à une (5a) de ses extrémités à la roue correspondante (1), et un organe élastique (6) transversal sensiblement perpendiculaire auxdits panneaux (2a) et ancré à l'autre extrémité (5b) de chacune des barres de torsion susdites à l'extérieur desdits panneaux (2a), caractérisé en ce que chaque extrémité (6a) de l'organe élastique susdit se prolonge au-delà de son ancrage à la barre de torsion correspondante (5) par rapport audit panneau en une partie extrême (9) s'étendant en regard d'un élément (2b) solidaire de ladite structure (2) et en ce qu'entre ledit élément (2b) et ladite partie extrême (9), est disposée une butée (11) déformable élastiquement tendant à s'opposer à leur rapprochement relatif au-delà d'un seuil déterminé de charge du véhicule.

2. Perfectionnement selon la revendication 1, caractérisé en ce que la butée (11) est portée par ladite partie extrême (9) de l'organe élastique et porte par simple contact sur ledit élément (2b).

3. Perfectionnement selon la revendication 1, caractérisé en ce que ladite butée (11) est solidaire dudit élément (2b) et porte par simple contact sur ladite partie extrême (9).

4. Perfectionnement selon l'une quelconque des revendications précédentes, caractérisé en ce que la butée (11) est un coussin en matière élastique de dimensions telles qu'elle n'agit qu'à partir du seuil de charge déterminé susdit.

## Claims

1. An improvement in the suspension of a group of vehicle wheels comprising two wheels (1) located respectively outside at least two longitudinal panels (2a) belonging to the structure (2) of the vehicle, two suspension devices, each being constituted by at least one torsion bar (5) substantially parallel to said panels (2a) connected at one (5a) of its ends to the corresponding wheel (1), and a transverse elastic member (6) substantially perpendicular to said panels (2a) and anchored at the other end (5b) of each of the said torsion bars outside said panels (2a), characterised in that each end (6a) of said elastic members extends beyond its anchorage to the corresponding torsion bar (5) with respect to said panel, in an end part (9) extending opposite an element (2b) fast with said structure (2) and there is disposed between said element (2b) and said end part (9), an elastically deformable stop tending (11) to restrain their relative approach beyond a determined load threshold of the vehicle.

2. Improvement according to claim 1, characterised in that the stop (11) is carried by said end part (9) of the elastic member and bears by simple contact on said element (2b).

3. Improvements according to claim 1, characterised in that stop member (11) is fast with said element (2) and bears by simple contact on said end part (9).

4. Improvement according to any one of the preceding claims, characterised in that the stop (11) is a cushion made of elastic material of such dimensions that it acts only from a determined load threshold mentioned above.

## Patentansprüche

1. Verbesserung an einer Aufhängung für eine Radgruppe eines Fahrzeugs mit zwei jeweils an der Außenseite von zumindest zwei Längsholmen (2a) des Fahrzeugchassis (2) angeordneten Rädern (1), zwei Aufhängungvorrichtungen mit jeweils zumindest einer im wesentlichen parallel zu den Holmen (2a) verlaufenden Welle (5), die an einem Ende (5a) mit dem entsprechenden Rad (1) in Verbindung steht, und mit einem im wesentlichen senkrecht zu den Holmen (2a) verlaufenden elastischen Querelement (6), welches am anderen Ende (5b) jeder Welle außerhalb der Holme (2a) verankert ist, dadurch gekennzeichnet, daß sich ein Ende (6a) des elastischen Elements über seine Verankerungsstelle an der Welle (5) hinaus mit einem in bezug auf den Holm äußeren Abschnitt (9) zu einem mit dem Chassis (2) verbundenen Element (2b) erstreckt und daß zwischen dem Element (2b) und dem äußeren Abschnitt (9) ein elastisch verformbarer Anschlag (11) vorgesehen ist, der eine Annäherung derselben über eine von der Fahrzeugbelastung festgelegte Schwelle hinaus verhindert.

2. Verbesserung nach Anspruch 1, dadurch gekennzeichnet, daß der Anschlag (11) vom äußeren Abschnitt (9) des elastischen Elements getragen wird und durch einfachen Kontakt auf dem Element (2b) ruht.

3. Verbesserung nach Anspruch 1, dadurch gekennzeichnet, daß der Anschlag (11) mit dem Element (2b) verbunden ist und durch einfachen Kontakt auf dem äußeren Anschnitt (9) ruht.

4. Verbesserung nach einem der vorangehenden Ansprüche, dadurch gekennzeichnet, daß der Anschlag (11) ein Kissen aus elastischem Material mit solchen Abmessungen ist, daß es erst ab der festgelegten Belastungsschwelle wirkt.

**Fig. 1**

1

Fig-2